# EUROPÄISCHE PATENTSCHRIFT

(11) **EP 3 685 653 B1**
(45) Veröffentlichungstag und Bekanntmachung des Hinweises auf die Patenterteilung: **12.10.2022**
(21) Anmeldenummer: 20401008.6
(22) Anmeldetag: 24.01.2020
(51) Int. Cl.: A01C 17/00

(54) **GRENZSTREUEINRICHTUNG**
BOUNDARY SPREADING DEVICE
DISPOSITIF D'ÉPANDAGE EN LIMITE

(30) Priorität: 28.01.2019 DE 102019102006
(43) Veröffentlichungstag der Anmeldung: 29.07.2020
(73) Patentinhaber: Amazonen-Werke H. Dreyer SE & Co. KG, 49205 Hasbergen (DE)
(72) Erfinder: Kleine-Hartlage, Hubertus, 49186 Bad Iburg (DE); Bäumker, Herbert, 49176 Hilter (DE); Jan, Esslage, 48155 Münster (DE)

(56) Entgegenhaltungen:
- EP-A1- 2 944 175
- EP-A1- 3 241 421
- DE-A1- 2 407 085
- DE-A1- 19 949 537

## Beschreibung

Die Erfindung betrifft eine Grenzstreueinrichtung nach dem Oberbegriff des Patentanspruchs 1, ein Streugerät nach dem Oberbegriff des Patentanspruchs 8 und ein Verfahren zum Ausbringen von Streugut nach dem Patentanspruch 9.

Ein ähnliches Verfahren zum Ausbringen von Streugut ist in EP 2 944 175 A1 offenbart, wobei lediglich eine einfache Grenzstreueinrichtung, ohne Streugutstromtrenneinrichtung,im Streugutabwurfbereich einer Streuscheibe positioniert wird.

Beim Ausbringen von Streugut, wie beispielsweise Dünger, besteht regelmäßig das Problem, dass in grenznahen Bereichen die Umsetzung einer beabsichtigten Querverteilung des Streuguts nicht möglich ist. Dies ist insbesondere darauf zurückzuführen, dass die Verteilcharakteristik bekannter Streugeräte eine in Querrichtung flach abfallende Flanke aufweist.

Bei einer großflächigen Ausbringung von Streugut wird die zu bearbeitende Fläche während der Streugutausbringung derart abgefahren, dass durch eine Überlagerung von Streubildern in Querrichtung insgesamt eine im Wesentlichen gleichmäßige Streugutverteilung erzielt wird. Eine entsprechende Überlagerung einzelner Streubilder ist in Grenzbereichen nicht ohne Weiteres realisierbar, sodass entsprechende Grenzstreueinrichtungen eingesetzt werden, um die Gleichmäßigkeit der Querverteilung in grenznahen Bereichen zu verbessern. Bekannte Grenzstreueinrichtungen weisen üblicherweise eine Umlenkeinrichtung auf, mittels welcher ein durch den Abwurf von Streugut erzeugter Streugutstrom nach Verlassen der Streuscheibe während der Flugphase umgelenkt wird. Derartige Grenzstreueinrichtungen lassen sich über eine Befestigungseinrichtung an dem eingesetzten Streugerät befestigen. Aus der Druckschrift EP 2 944 177 A1 ist beispielsweise eine Grenzstreueinrichtung bekannt, welche mehrere aufrechte Leitflächenelemente umfasst, über welche die die Flugbahn eines Teils des abgeworfenen Streuguts beeinflusst werden kann.

Ferner ist aus der Druckschrift DE 199 49 537 A1 eine Grenzstreueinrichtung nach dem Oberbegriff des Anspruchs 1 bekannt, welche mehrere im Wesentlichen horizontal und parallel zueinander verlaufende Leitplatten aufweist, über welche ein Streubild mit zur Grenze steil abfallender Streuflanke erreicht werden soll.

Mittels der bekannten Grenzstreueinrichtungen lässt sich das Streubild in Grenznähe jedoch nicht in ausreichendem Maße anpassen, sodass eine relativ ungleichmäßige Streugutverteilung in Grenznähe bisher nicht vermieden werden kann. Ferner weisen die bekannten Grenzstreueinrichtungen eine eingeschränkte Variabilität auf und lassen sich nicht an unterschiedliche Ausbringsituationen und Gerätekonfigurationen anpassen.

Die der Erfindung zugrundeliegende Aufgabe besteht somit darin, die Streugutverteilung in Grenznähe weiter zu verbessern, wobei die hierbei eingesetzte Grenzstreueinrichtung variabel einsetzbar sein soll.

Die Aufgabe wird gelöst durch eine Grenzstreueinrichtung der eingangs genannten Art, wobei die Streugutstromtrenneinrichtung der erfindungsgemäßen Grenzstreueinrichtung eine obere Umlenkplatte zur Umlenkung des oberen Streugutteilstroms und eine untere Umlenkplatte zur Umlenkung des unteren Streugutteilstroms aufweist, wobei die obere Umlenkplatte und die untere Umlenkplatte voneinander abweichende Neigungen aufweisen.

Die Erfindung macht sich die Erkenntnis zunutze, dass durch die voneinander abweichenden Neigungen der oberen Umlenkplatte und der unteren Umlenkplatte die Umlenkung des oberen Streugutteilstroms und des unteren Streugutteilstroms in unterschiedliche Richtungen erfolgt. Somit können die Streubilder, welche sich aus dem oberen Streugutteilstrom und dem unteren Streugutteilstrom ergeben, zur Erzielung einer gleichmäßigen Streugutverteilung in Grenznähe in geeigneter Weise überlagert werden. Das Streugut kann somit auch in Grenznähe wesentlich gleichmäßiger ausgebracht werden.

Die obere Umlenkplatte und/oder die untere Umlenkplatte sind in einer Betriebsausrichtung der Grenzstreueinrichtung vorzugsweise gegenüber einer Horizontalen geneigt ausgerichtet. Der Betrag des Neigungswinkels der oberen Umlenkplatte und/oder der unteren Umlenkplatte gegenüber einer Horizontalen liegt in einer Betriebsausrichtung der Grenzstreueinrichtung vorzugsweise zwischen 5 Grad und 60 Grad, besonders bevorzugt zwischen 15 und 50 Grad. Die obere Umlenkplatte und/oder die untere Umlenkplatte können starr und unbeweglich ausgebildet sein. Alternativ können die obere Umlenkplatte und/oder die untere Umlenkplatte auch beweglich, insbesondere schwenkbar und/oder verschiebbar, befestigt sein. Die Grenzstreueinrichtung kann auch als Grenzstreuschirm bezeichnet werden.

In einer bevorzugten Ausführungsform der erfindungsgemäßen Grenzstreueinrichtung weist die Umlenkeinrichtung eine Streuguteinlassseite und eine Streugutauslassseite auf. Die obere Umlenkplatte und die untere Umlenkplatte laufen von der Streuguteinlassseite in Richtung der Streugutauslassseite auseinander. Alternativ oder zusätzlich bilden die obere Umlenkplatte und die untere Umlenkplatte gemeinsam eine sich in Richtung der Streuguteinlassseite verjüngende Keilform aus. Vorzugsweise laufen die obere Umlenkplatte und die untere Umlenkplatte in Richtung der Streuguteinlassseite zusammen. Die obere Umlenkplatte und die untere Umlenkplatte können miteinander in Kontakt stehen und/oder miteinander verschweißt sein. Durch die auseinanderlaufende Ausrichtung der oberen Umlenkplatte und der unteren Umlenkplatte bzw. durch deren keilförmige Anordnung wird der obere Streugutteilstrom vorzugsweise nach oben umgelenkt und der untere Streugutteilstrom nach unten.

Darüber hinaus ist eine erfindungsgemäße Grenzstreueinrichtung vorteilhaft, bei welcher die Umlenkeinrichtung eine in Flugrichtung des Streuguts hinter der Streugutstromtrenneinrichtung angeordnete Prallplatte aufweist, welche dazu eingerichtet ist, zumindest einen Teil des bereits durch die Streugutstromtrenneinrichtung umgelenkten oberen Streugutteilstroms und/oder unteren Streugutteilstroms umzulenken. Die Prallplatte kann dazu eingerichtet sein, zumindest einen Teil des bereits durch die Streugutstromtrenneinrichtung umgelenkten oberen Streugutteilstroms nach unten. Bei geeigneter alternativer Anordnung kann die Prallplatte dazu eingerichtet sein, einen Teil des oberen Streugutteilstroms nach oben umzulenken.Die Prallplatte kann alternativ dazu eingerichtet sein, zumindest einen Teil des bereits durch die Streugutstromtrenneinrichtung umgelenkten unteren Streugutstroms nach unten oder durch geeignete Anordnung nach oben umzulenken. Die Umlenkeinrichtung kann auch mehrere, beispielsweise zwei, Prallplatten aufweisen, wobei eine erste Prallplatte zum Umlenken zumindest eines Teils des bereits durch die Stromguttrenneinrichtung umgelenkten oberen Streugutteilstroms ausgebildet ist und eine zweite Prallplatte zum Umlenken zumindest eines Teils des bereits durch die Streugutstromtrenneinrichtung umgelenkten unteren Streugutteilstroms ausgebildet ist. Vorteilhaft ist hierbei, dass durch die Prallplatte bzw. Prallplatten der jeweilige Streugutteilstrom in Ab- bzw. Aufwärtsrichtung umlenkbar ist. Folglich bietet bzw. bieten sie in vorteilhafter Weise eine weitere Einstellmöglichkeit zur Beeinflussung des erreichten Streubildes.

Außerdem ist eine erfindungsgemäße Grenzstreueinrichtung vorteilhaft, bei welcher die Neigung der Prallplatte einstellbar und die Prallplatte in mehreren Neigungsausrichtungen feststellbar ist. Vorzugsweise ist die Neigung der Prallplatte gegenüber einer Horizontalen einstellbar, sodass die Prallplatte eine im Wesentliche horizontal verlaufende Schwenkachse aufweist. Die Neigung der Prallplatte ist vorzugsweise manuell verstellbar. Die Prallplatte kann auch mit einer Winkelführung gekoppelt sein, welche ein Einstellen des Neigungswinkels erlaubt. Die Umlenkeinrichtung kann eine Kennzeichnung und/oder Markierungen aufweisen, über welche die aktuelle Neigungsausrichtung der Prallplatte ableitbar und/oder ablesbar ist. Über eine Variation der Neigung der Prallplatte kann eingestellt werden, in welchem Maße das auf die Prallplatte aufprallende Streugut nach unten oder nach oben umgelenkt wird. Somit ergibt sich in Kombination mit der Streugutstromtrenneinrichtung ein äußerst variabel einstellbares Grenzstreusystem.

In einer weiteren Ausführungsform der erfindungsgemäßen Grenzstreueinrichtung weist die Umlenkeinrichtung mehrere voneinander beabstandete aufrechte Umlenklamellen auf, welche dazu eingerichtet sind, die Radialströmungsrichtung des oberen Streugutteilstroms und/oder des unteren Streugutteilstroms zu verändern. Vorzugsweise weisen einzelne oder sämtliche Umlenklamellen voneinander abweichende Umlenkwinkel auf, sodass auch die Form des Streubildes durch die Umlenklamellen angepasst wird. Die Umlenklamellen können ferner einen oder mehrere Knicke aufweisen, wodurch die einzelnen Umlenklamellen in mehrere Umlenksegmente aufgeteilt werden und die einzelnen Umlenksegmente unterschiedliche Umlenkungen des Streuguts bewirken.

In einer weiteren bevorzugten Ausführungsform der erfindungsgemäßen Grenzstreueinrichtung weist die Umlenkeinrichtung einen oberen Umlenkkanal für den oberen Streugutteilstrom auf. Die aufrechten Umlenklamellen sind, insbesondere nur, innerhalb des oberen Umlenkkanals angeordnet. In dem Bereich, welcher von dem unteren Streugutteilstrom durchströmt wird, sind vorzugsweise keine aufrechten Umlenklamellen angeordnet. Die Umlenkeinrichtung kann auch einen unteren Umlenkkanal für den unteren Streugutteilstrom aufweisen, wobei die aufrechten Umlenklamellen, insbesondere nur, innerhalb des unteren Umlenkkanals angeordnet sein können. Dadurch, dass lediglich ein Streugutteilstrom durch die Umlenklamellen umgelenkt wird, können die sich aus den Teilströmen ergebenden Streubilder präzise aneinander angepasst werden, sodass sich bei Überlagerung der Streubilder eine möglichst gleichmäßige Streugutverteilung ergibt.

Die erfindungsgemäße Grenzstreueinrichtung wird ferner dadurch vorteilhaft weitergebildet, dass die Befestigungseinrichtung und die Umlenkeinrichtung in unterschiedlichen Relativpositionen aneinander fixierbar sind. Die Befestigungseinrichtung erlaubt somit eine variable Anpassung der Grundeinstellung bezüglich Höhe und Sektor an die verwendete Streuscheibe und/oder an die verwendete Abwurfschaufel bzw. die verwendeten Abwurfschaufeln auf der Streuscheibe. Vorzugsweise weist die Befestigungseinrichtung mehrere voneinander beabstandete Fixierbereiche auf, welche jeweils zur Befestigung der Umlenkeinrichtung an der Befestigungseinrichtung ausgebildet sind. Hierdurch ist die Höhe und/oder die Neigung der Umlenkeinrichtung in der Betriebsposition einstellbar. Verschiedene Streuscheiben unterscheiden sich im Hinblick auf ihre Anbauhöhe, sodass entsprechende Höhenunterschiede durch eine geeignete Befestigung der Grenzstreueinrichtung ausgeglichen werden müssen. Innerhalb der Fixierbereiche können Ausnehmungen, insbesondere Bohrungen, positioniert sein, an welchen die Umlenkeinrichtung befestigt werden kann. Die Ausnehmungen der Fixierbereiche können ein Bohrbild ausbilden.

Die der Erfindung zugrundeliegende Aufgabe wird ferner durch ein Streugerät der eingangs genannten Art gelöst, wobei die Grenzstreueinrichtung des erfindungsgemäßen Streugeräts nach einer der vorstehend beschriebenen Ausführungsformen ausgebildet ist. Hinsichtlich der Vorteile und Modifikationen des erfindungsgemäßen Streugeräts wird zunächst auf die Vorteile und Modifikationen der erfindungsgemäßen Grenzstreueinrichtung verwiesen.

Das Streugerät kann ein landwirtschaftliches Streugerät, insbesondere ein Zentrifugaldüngerstreuer und/oder ein Zweischeibendüngerstreuer sein. Die Aufhängung, an welcher die Grenzstreueinrichtung befestigt ist, kann beispielsweise ein Stellglied, insbesondere einen Stellzylinder, aufweisen, mittels welchem die Grenzstreueinrichtung zwischen einer Betriebsposition und einer Stauposition hin und her bewegbar ist. Somit kann die Grenzstreueinrichtung beim Ausbringen von Streugut auf grenzferne Bereiche einer landwirtschaftlichen Nutzfläche in die Stauposition verfahren werden, um eine Umlenkung des ausgeworfenen Streuguts durch die Grenzstreueinrichtung zu vermeiden. Bei der Ausbringung von Streugut in grenznahen Bereichen kann die Grenzstreueinrichtung dann in die Betriebsposition bewegt werden, um eine gleichmäßige Streugutverteilung auch in Grenznähe umsetzen zu können.

Die der Erfindung zugrundeliegende Aufgabe wird ferner durch ein Verfahren der eingangs genannten Art gelöst, wobei das Einstellen des Grenzstreu-Aufgabepunkts des Streuguts auf die Streuscheibe beim erfindungsgemäßen Verfahren in Abhängigkeit der verwendeten Streuscheibe und/oder in Abhängigkeit von Abwurfeigenschaften des Streuguts erfolgt.

Erfindungsgemäß erfolgt das Ausbringen des Streuguts mit einer Grenzstreueinrichtung nach einer der vorstehend beschriebenen Ausführungsformen. Insbesondere wird die Grenzstreueinrichtung auf der der Grenze zugewandten Seite des Streugutabwurfbereichs der der Grenze abgewandten Streuscheibe positioniert. Vorzugsweise wird die der Grenze zugewandte Streuscheibe während der Ausbringung deaktiviert. Die verwendete Streuscheibe kann manuell durch einen Benutzer definiert oder durch das Streugerät erfasst werden. Die Streuscheiben können sich beispielsweise in der Schaufelgeometrie, insbesondere der Schaufellänge, voneinander unterscheiden. Die Abwurfeigenschaften des Streuguts können beispielsweise über einen dem Streugut zugeordneten Wurfrichtungswert definiert werden. Der Wurfrichtungswert des Streuguts kann manuell durch einen Benutzer definiert oder durch das Streugerät erfasst werden. Der Wurfrichtungswert hängt von der Verweildauer des Streuguts auf der Streuscheibe vor dem Abschleudern des Streuguts ab. Je kleiner der Wurfrichtungswert des Streuguts ist, desto weiter ist der Grenzstreu-Aufgabepunkt aus dem von der Grenzstreueinrichtung abgedeckten Bereich herauszudrehen, sodass eine spätere Aufgabe des Streuguts auf die Streuscheibe erfolgt. Somit wird eine Überdüngung am Feldrand vermieden. Je größer der Wurfrichtungswert des Streuguts ist, desto weiter ist der Grenzstreu-Aufgabepunkt in den von der Grenzstreueinrichtung abgedeckten Bereich hineinzudrehen, sodass eine frühere Aufgabe des Streuguts auf die Streuscheibe erfolgt. Somit wird gewährleistet, dass eine ausreichende Menge an Streugut in Richtung des Grenzbereichs abgeworfen wird. Streuscheiben weisen einen kritischen Abwurfwinkel für das Streugut auf, ab welchem eine zu hohe Menge an Streugut in einen Spritzschutz des Streugeräts geworfen wird. Dieser kritische Abwurfwinkel ist bei der Einstellung des Grenzstreu-Aufgabepunkts zu berücksichtigen.

In einer bevorzugten Ausführungsform des erfindungsgemäßen Verfahrens erfolgt das Einstellen des Grenzstreu-Aufgabepunkts des Streuguts auf die Streuscheibe in Abhängigkeit des Abstands des Streugeräts oder der Streuscheibe zur Grenze und/oder in Abhängigkeit der Ausrichtung einer Prallplatte einer den Streugutstrom umlenkenden Umlenkeinrichtung der Grenzstreueinrichtung. Je kleiner der Abstand zur Grenze ist, desto weiter ist der Grenzstreu-Aufgabepunkt aus dem von der Grenzstreueinrichtung abgedeckten Bereich herauszudrehen, sodass eine spätere Aufgabe des Streuguts auf die Streuscheibe erfolgt. Somit wird eine Überdüngung in unmittelbarer Grenznähe vermieden. Je größer der Abstand zur Feldgrenze ist, desto weiter ist der Grenzstreu-Aufgabepunkt in den von der Grenzstreueinrichtung abgedeckten Bereich hineinzudrehen, sodass eine frühe Aufgabe des Streuguts auf die Streuscheibe erfolgt. Somit wird gewährleistet, dass eine ausreichende Menge an Streugut in Richtung des Grenzbereichs abgeworfen wird.

In einer weiteren bevorzugten Ausführungsform des erfindungsgemäßen Verfahrens wird zum Einstellen des Grenzstreu-Aufgabepunkts des Streuguts auf die Streuscheibe eine Berechnung des Grenzstreu-Aufgabepunkts durchgeführt, bei welcher von einem für das Normalstreuen geeigneten Normalstreu-Aufgabepunkt ausgegangen wird. Der Normalstreu-Aufgabepunkt wird also in Abhängigkeit der vorliegenden Grenzstreugegebenheiten angepasst. Die Berechnung des Grenzstreu-Aufgabepunkts kann beispielsweise von dem Streugerät durchgeführt werden, sodass eine Anpassung des Aufgabepunkts in Grenznähe selbsttätig durch das Streugerät veranlasst werden kann.

In einer weiteren bevorzugten Ausführungsform umfasst das Verfahren das selbsttätige Einstellen einer Grenzstreu-Aufgabemenge an Streugut auf die Streuscheibe. Das Einstellen der Grenzstreu-Aufgabemenge an Streugut erfolgt vorzugsweise in Abhängigkeit des eingestellten Aufgabepunkts und/oder in Abhängigkeit des Abstands des Streugeräts zur Grenze. Durch das selbsttätige Einstellen des Grenzstreu-Aufgabepunkts und der Grenzstreu-Aufgabemenge erfolgt eine selbsttätige Anpassung des Streubildes in Grenznähe automatisch ohne die Notwendigkeit manueller Einstellvorgänge. Der Ausbringkomfort wird somit erheblich gesteigert.

In einer anderen Ausführungsform des erfindungsgemäßen Verfahrens weist die verwendete Streuscheibe unterschiedliche Wurfschaufeln auf und die Grenzstreueinrichtung ist dazu eingerichtet, den Streugutstrom in einen oberen Streugutteilstrom und einen unteren Streugutteilstrom aufzuteilen. Das Positionieren der Grenzstreueinrichtung im Streugutabwurfbereich der Streuscheibe erfolgt vorzugsweise derart, dass das von einer ersten Wurfschaufel abgeworfene Streugut von der Grenzstreueinrichtung in einen oberen Streugutteilstrom und einen unteren Streugutteilstrom aufgeteilt wird und das von einer zweiten Wurfschaufel abgeworfene Streugut von der Grenzstreueinrichtung derart umgelenkt wird, dass dieser im Wesentlichen vollständig dem oberen Streugutstrom folgt. Die Anteile des Streuguts, welche auf den oberen Streugutteilstrom und den unteren Streugutteilstrom entfallen, variieren je nach der verwendeten Streuscheibe. Aufgrund unterschiedlicher Wurfschaufeln ergeben sich unterschiedliche Abwurfhöhen des Streuguts und somit unterschiedliche Auftreffbereiche auf die Grenzstreueinrichtung.

Durch die Aufteilung des abgeworfenen Streugutstroms in unterschiedliche Streugutteilströme ergeben sich mehrere einander überlappende Einzelstreubilder, welche insgesamt zu einer gleichmäßigen Streugutverteilung in Grenznähe führen. Vorzugsweise weist die Streuscheibe Wurfschaufeln unterschiedlicher Länge auf. Das durch eine kurze Wurfschaufel abgeworfene Streugut wird vorzugsweise durch einen Keil der Umlenkeinrichtung der Grenzstreueinrichtung geteilt. Das nach oben geleitete Streugut wird vorzugsweise durch Umlenklamellen zusätzlich radial umgelenkt. Die Flugbahn des nach oben geleiteten Streuguts wird vorzugsweise durch eine Prallplatte weiter beeinflusst. Das nach unten geleitete Streugut sorgt für eine Basisausbringung und somit für die Ausbringung einer Basismenge an Streugut. Das durch eine lange Wurfschaufel abgeworfene Streugut wird vorzugsweise nahezu ausschließlich nach oben gelenkt.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel der erfindungsgemäßen Grenzstreueinrichtung in einer perspektivischen Darstellung;
- Fig. 2: die in der Fig. 1 gezeigte Grenzstreueinrichtung in einer weiteren perspektivischen Darstellung;
- Fig. 3: einen Teil der in der Fig. 1 gezeigten Grenzstreueinrichtung in einer perspektivischen Darstellung;
- Fig. 4: ein Ausführungsbeispiel der erfindungsgemäßen Grenzstreueinrichtung in einer schematischen Schnittdarstellung während eines Streuvorgangs;
- Fig. 5: die in der Fig. 4 gezeigte Grenzstreueinrichtung in einer schematischen Schnittdarstellung während eines Streuvorgangs;
- Fig. 6: ein Ausführungsbeispiel der erfindungsgemäßen Grenzstreueinrichtung in einer schematischen Draufsicht während eines Streuvorgangs; und
- Fig. 7: die in der Fig. 6 gezeigte Grenzstreueinrichtung in einer schematischen Draufsicht während eines Streuvorgangs.

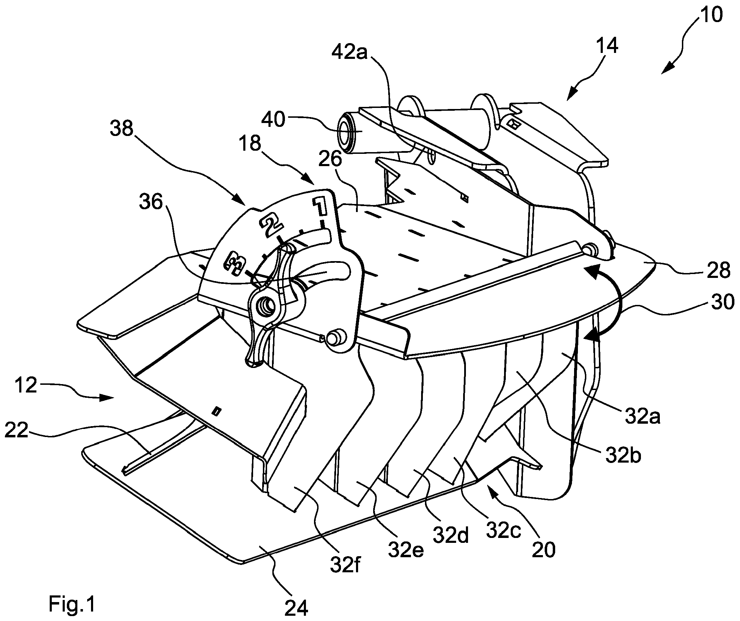

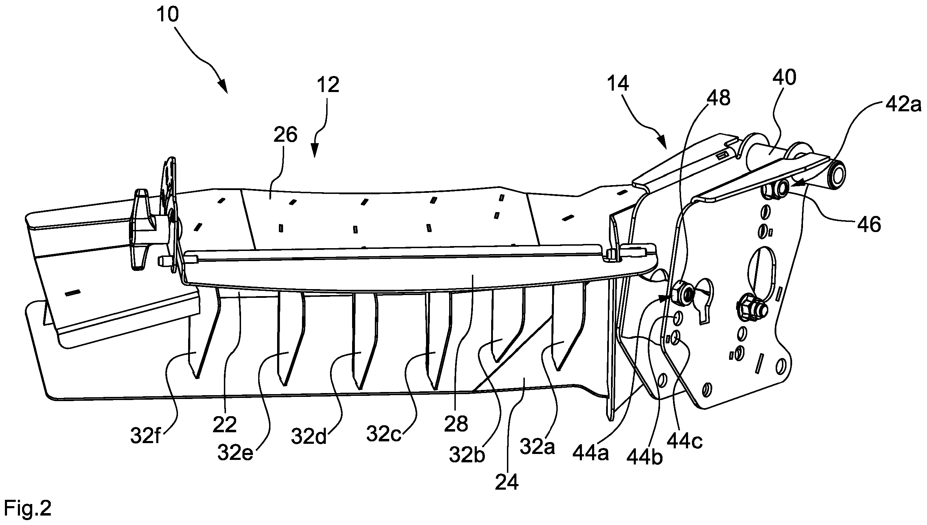

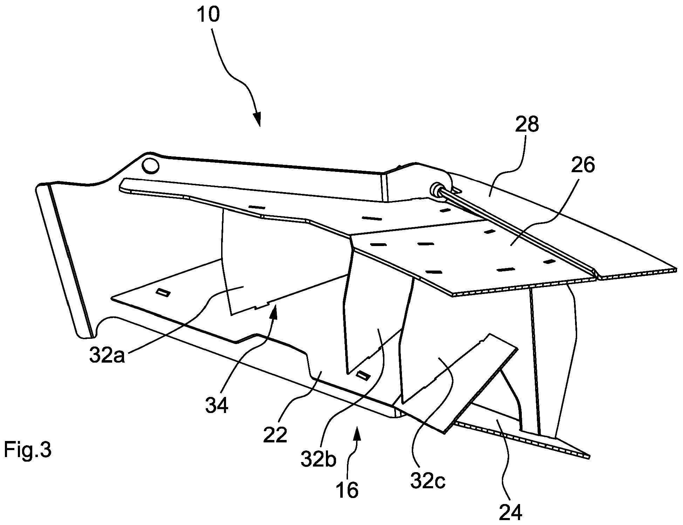

Die Fig. 1 bis Fig. 3 zeigen eine Grenzstreueinrichtung 10, welche zum Ausbringen von Streugut auf eine landwirtschaftliche Nutzfläche eingesetzt werden kann.

Die Grenzstreueinrichtung 10 umfasst eine Umlenkeinrichtung 12 und eine Befestigungseinrichtung 14. Die Umlenkeinrichtung 12 dient zum Umlenken eines Streugutstroms 200. Der Streugutstrom 200 wird dadurch erzeugt, dass Streugut auf eine rotierend angetriebene Streuscheibe 100 eines Streugeräts aufgegeben wird und die Streuscheibe 100 das aufgegebene Streugut derart beschleunigt, dass es von der Streuscheibe 100 abgeschleudert wird. Durch die Umlenkeinrichtung 12 kann die Gleichmäßigkeit der Querverteilung des abgeworfenen Streuguts in grenznahen Bereichen einer landwirtschaftlichen Nutzfläche erheblich gesteigert werden. Mittels der Befestigungseinrichtung 14 kann die Grenzstreueinrichtung 10 an dem Streugerät befestigt werden.

Die Umlenkeinrichtung 12 weist eine Streuguteinlassseite 18 und eine Streugutauslassseite 20 auf. Zwischen der Streuguteinlassseite 18 und der Streugutauslassseite 20 ist eine Streugutstromtrenneinrichtung 16 positioniert, mittels welcher der Streugutstrom 200 in einen oberen Streugutteilstrom 202 und einen unteren Streugutteilstrom 204 aufgeteilt wird.

Damit neben der Trennung des Streugutstroms 200 in zwei Streugutteilströme 202, 204 gleichzeitig eine voneinander abweichende Änderung der Strömungsrichtung des oberen Streugutteilstroms 202 und des unteren Streugutteilstroms 204 erreicht wird, weist die Streugutstromtrenneinrichtung 16 eine obere Umlenkplatte 22 zur Umlenkung des oberen Streugutteilstroms 202 und eine untere Umlenkplatte 24 zur Umlenkung des unteren Streugutteilstroms 204 auf, wobei die obere Umlenkplatte 22 und die untere Umlenkplatte 24 voreinander abweichende Neigungen aufweisen. Die obere Umlenkplatte 22 und die untere Umlenkplatte 24 laufen von der Streuguteinlassseite 18 in Richtung der Streugutauslassseite 20 auseinander, sodass der obere Streugutteilstrom 202 nach oben umgelenkt wird und der untere Streugutteilstrom 204 nach unten umgelenkt wird.

Die Umlenkeinrichtung 12 weist außerdem eine in Flugrichtung des Streuguts hinter der Streuguttrenneinrichtung 16 angeordnete Prallplatte 28 auf, mittels welcher ein Teil des bereits durch die Streugutstromtrenneinrichtung 16 umgelenkten oberen Streugutteilstroms 202 wieder nach unten umgelenkt wird. Die Prallplatte 28 ist schwenkbar angelenkt und verlängert eine Abdeckplatte 26 der Umlenkeinrichtung 12. Durch eine Verstelleinrichtung kann die Prallplatte 28 entlang der dargestellten Schwenkrichtung 30 verschwenkt werden, sodass die Neigung der Prallplatte 28 einstellbar und die Prallplatte 28 in mehreren Neigungsausrichtungen feststellbar ist. Hierbei kann die Neigung der Prallplatte 28 gegenüber einer Horizontalen verändert werden. Die Einstellung der Neigung der Prallplatte 28 erfolgt dabei manuell, wobei die Prallplatte 28 in einer Winkelführung 36 geführt wird. Über Markierungen 38 kann ein Benutzer die aktuelle Neigungsausrichtung der Prallplatte 28 ablesen.

Ferner weist die Umlenkeinrichtung 12 mehrere voneinander beabstandete aufrechte Umlenklamellen 32a-32f auf. Die Umlenklamellen 32a-32f dienen zum Verändern der Radialströmungsrichtung des oberen Streugutteilstroms 202. Die obere Umlenkplatte 22 und die Abdeckplatte 26 definieren einen oberen Umlenkkanal 34 für den oberen Streugutteilstrom 202. Die aufrechten Umlenklamellen 32a-32f sind nur innerhalb des oberen Umlenkkanals angeordnet, wobei in dem Bereich, welcher von dem unteren Streugutstrom 204 durchströmt wird, keine aufrechten Umlenklamellen angeordnet sind.

Die Befestigungseinrichtung 14 und die Umlenkeinrichtung 12 sind in unterschiedlichen Relativpositionen aneinander fixierbar. Hierzu weist die Befestigungseinrichtung 14 mehrere Ausnehmungen 42a-42c, 44a-44c auf, welche ein Bohrbild ausbilden. Mittels entsprechender Befestigungselemente 46, 48 kann somit die Höhe und/oder die Neigung der Umlenkeinrichtung 12 in der Betriebsposition eingestellt werden. Die Befestigungselemente 46, 48 können beispielsweise als Stifte oder Bolzen ausgebildet sein.

Über den Befestigungsbolzen 40 der Befestigungseinrichtung 14 kann die Grenzstreueinrichtung 10 an einer Aufhängung des Streugeräts befestigt werden. Die Aufhängung des Streugeräts kann beispielsweise einen Stellzylinder aufweisen, mittels welchem die Grenzstreueinrichtung 10 zwischen einer Betriebsposition und einer Stauposition hin und her bewegbar ist. In der Betriebsposition befindet sich die Grenzstreueinrichtung 10 im Streugutabwurfbereich einer Streuscheibe 100 des Streugeräts. In der Stauposition befindet sich die Grenzstreueinrichtung 10 außerhalb des Streugutabwurfbereichs der Streuscheiben 100 des Streugeräts, sodass keine Umlenkung des Streuguts durch die Grenzstreueinrichtung 10 während des Streuvorgangs erfolgt.

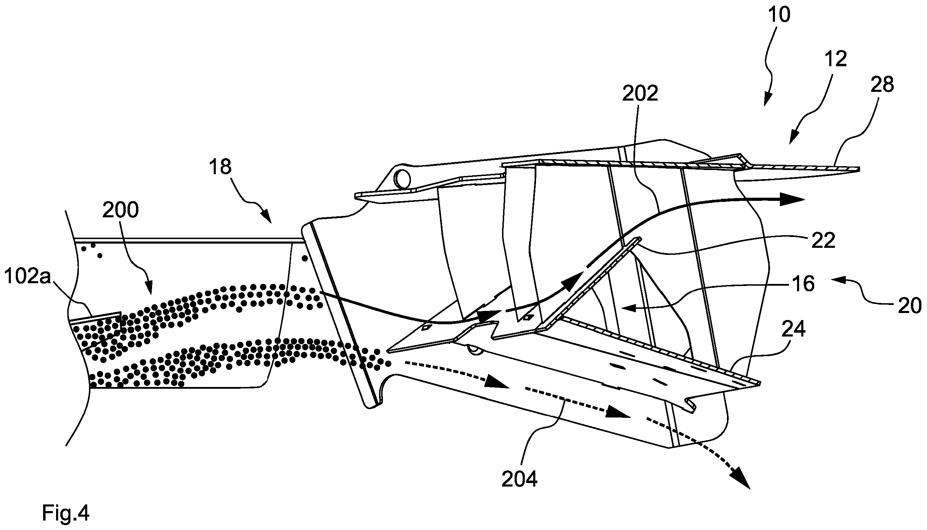

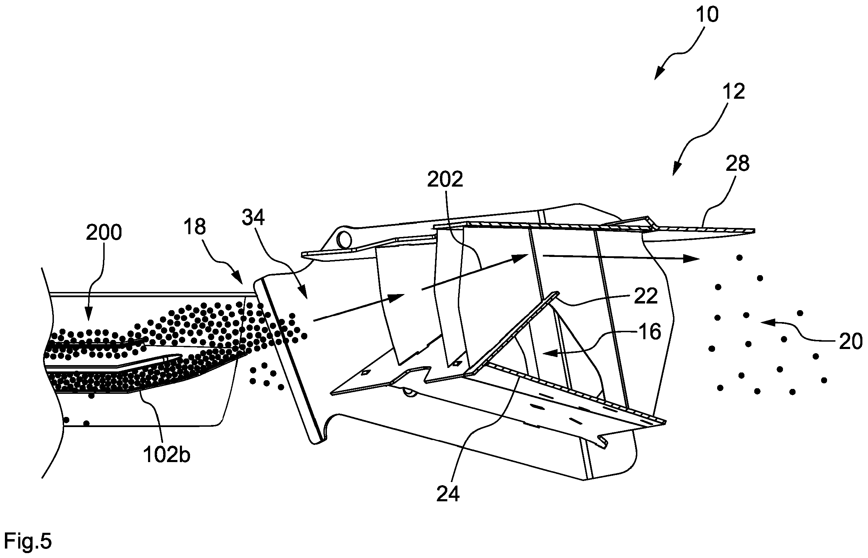

Die Fig. 4 und die Fig. 5 zeigen eine Grenzstreueinrichtung 10 während der Ausbringung von Streugut. Die Grenzstreueinrichtung 10 ist im Streugutabwurfbereich einer Streuscheibe 100 positioniert. Während des Grenzstreuens ist die Grenzstreueinrichtung 10 auf der der Grenze zugewandten Seite des Streugutabwurfbereichs der der Grenze abgewandten Streuscheibe 100 positioniert. Die der Grenze zugewandte Streuscheibe ist während des Grenzstreuvorgangs deaktiviert. Die eingesetzte Streuscheibe 100 weist zwei unterschiedliche Abwurfschaufeln 102a, 102b auf, welche sich hinsichtlich ihrer Schaufellänge voneinander unterscheiden. Die Abwurfschaufel 102a (vgl. Fig. 4) ist kürzer als die Abwurfschaufel 102b (vgl. Fig. 5).

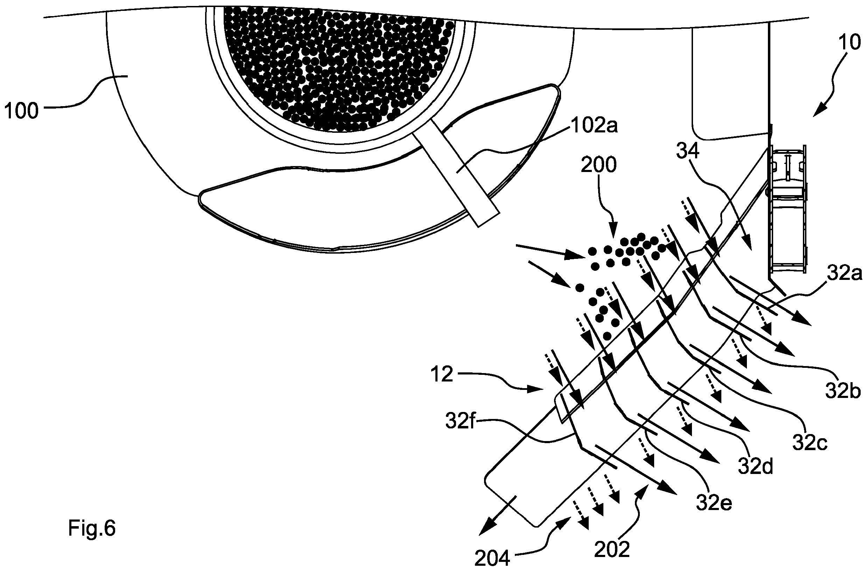

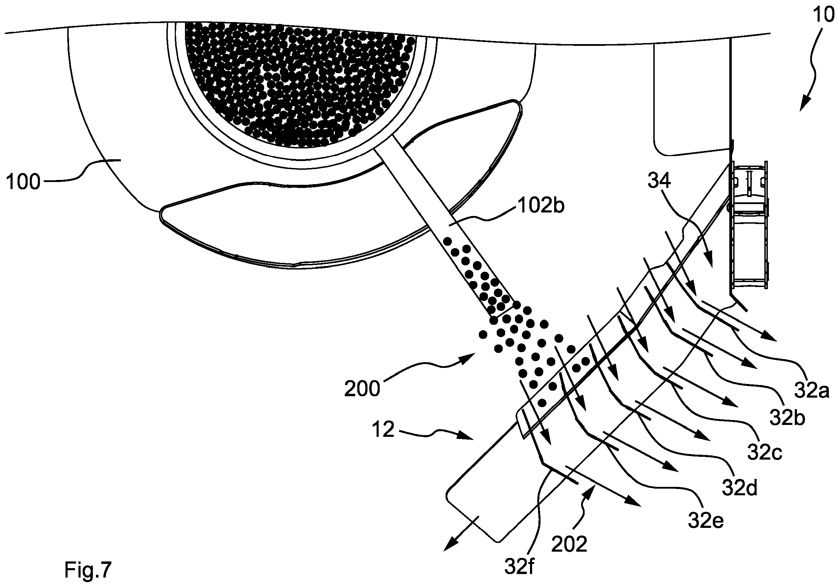

Die Fig. 4 zeigt den Abwurf von Streugut durch die kürzere Abwurfschaufel 102a. Die Grenzstreueinrichtung 10 teilt den Streugutstrom 200 in einen oberen Streugutteilstrom 202 und einen unteren Streugutteilstrom 204 auf. Das Aufteilen des Streugutstroms 200 in zwei Streugutteilströme 202, 204 erfolgt durch die Streugutstromtrenneinrichtung 16. Die Streugutstromtrenneinrichtung 16 weist eine obere Umlenkplatte 22 und eine untere Umlenkplatte 24 auf, welche gemeinsam eine sich in Richtung der Streuguteinlassseite 18 verjüngende Keilform ausbilden. Der untere Streugutteilstrom 204 wird durch die untere Umlenkplatte 24 nach unten umgelenkt. Der obere Streugutteilstrom 202 wird durch die obere Umlenkplatte 22 zunächst nach oben abgelenkt, wobei der obere Streugutteilstrom 202 nach der Umlenkung auf eine Prallplatte 28 aufprallt, welche den oberen Streugutteilstrom 202 erneut nach unten umlenkt. Darüber hinaus erfährt der obere Streugutteilstrom 202 eine weitere Umlenkung in Radialrichtung, welche mit aufrechten Umlenklamellen 32a-32f umgesetzt wird. Diesbezüglich wird auf die Fig. 6 und die Fig. 7 verwiesen.

Die Fig. 5 zeigt das Abwerfen des Streuguts mittels der langen Abwurfschaufel 102b. Aufgrund der Position und der Geometrie der Abwurfschaufel 102b wird im Wesentlichen die gesamte Menge an Streugut in den oberen Umlenkkanal 34 abgeworfen.

Da die beiden Abwurfschaufeln 102a, 102b gegenüberliegend angeordnet sind, treten die in Fig. 4 und Fig. 5 dargestellten Zustände in abwechselnder Reihenfolge während der Ausbringung von Streugut auf.

Die Fig. 6 und die Fig. 7 zeigen ebenfalls eine Streugutausbringung mit einer Streuscheibe 100, deren Abwurfschaufeln 102a, 102b unterschiedliche Längen aufweisen. Durch die Schnittdarstellung ist jeweils der obere Umlenkkanal 34 der Umlenkeinrichtung 12 der Grenzstreueinrichtung 10 sichtbar. Innerhalb des oberen Umlenkkanals 34 sind mehrere voneinander beabstandete aufrechte Umlenklamellen 34a-34f angeordnet, welche zum Verändern der Radialströmungsrichtung des oberen Streugutteilstroms 202 dienen. In dem Bereich, welcher von dem unteren Streugutteilstrom 204 durchströmt wird, sind keine Umlenklamellen angeordnet. Die Umlenklamellen 34a-34f im oberen Umlenkkanal 34 weisen jeweils eine Knickung auf, sodass eine Mehrfachumlenkung durch die Umlenklamellen realisiert wird.

Die Fig. 6 zeigt einen Zustand, bei welchem das Streugut mittels der kurzen Abwurfschaufel 102a abgeworfen wird. Wie zuvor beschrieben, kommt es in diesem Fall zu der Ausbildung eines oberen Streugutteilstroms 202 und eines unteren Streugutteilstroms 204.

Die Fig. 7 zeigt einen Zustand, bei welchem das Streugut durch die lange Abwurfschaufel 102b abgeworfen wird. Aufgrund der Position und Geometrie der Abwurfschaufel 102b bildet sich in diesem Fall lediglich ein oberer Streugutstrom 202 aus, welcher durch die obere Umlenkplatte 22 zunächst nach oben und anschließend durch die Prallplatte 28 wieder nach unten umgelenkt wird.

Eine Umlenkung durch die untere Umlenkplatte 24 erfolgt bei dem in Fig. 7 dargestellten Zustand nicht.

### Bezugszeichen

- 10: Grenzstreueinrichtung
- 12: Umlenkeinrichtung
- 14: Befestigungseinrichtung
- 16: Streugutstromtrenneinrichtung
- 18: Streuguteinlassseite
- 20: Streugutauslassseite
- 22: obere Umlenkplatte
- 24: untere Umlenkplatte
- 26: Abdeckplatte
- 28: Prallplatte
- 30: Schwenkrichtung
- 32a-32f: Umlenklamellen
- 34: Umlenkkanal
- 36: Winkelführung
- 38: Markierungen
- 40: Befestigungsbolzen
- 42a-42c: Ausnehmungen
- 44a-44c: Ausnehmungen
- 46: Befestigungselement
- 48: Befestigungselement

- 100: Streuscheibe
- 102a, 102b: Wurfschaufeln

- 200: Streugutstrom
- 202: oberer Streugutteilstrom
- 204: unterer Streugutteilstrom

## Patentansprüche

1. Grenzstreueinrichtung (10) für ein Streugerät, mit
- einer Umlenkeinrichtung (12), welche dazu eingerichtet ist, einen Streugutstrom (200) umzulenken; und
- einer Befestigungseinrichtung (14), mittels welcher die Grenzstreueinrichtung (10) an einem Streugerät befestigbar ist;
wobei die Umlenkeinrichtung (12) eine Streugutstromtrenneinrichtung (16) aufweist, welche dazu eingerichtet ist, den Streugutstrom (200) in einen oberen Streugutteilstrom (202) und einen unteren Streugutteilstrom (204) aufzuteilen;
wobei die Streugutstromtrenneinrichtung (16) eine obere Umlenkplatte (22) zur Umlenkung des oberen Streugutteilstroms (202) und eine untere Umlenkplatte (24) zur Umlenkung des unteren Streugutteilstroms (204) aufweist, **dadurch gekennzeichnet, dass** die obere Umlenkplatte (22) und
die untere Umlenkplatte (24) voneinander abweichende Neigungen aufweisen.

2. Grenzstreueinrichtung (10) nach Anspruch 1,
wobei die Umlenkeinrichtung (12) eine Streuguteinlassseite (18) und eine Streugutauslassseite (20) aufweist,
**dadurch gekennzeichnet, dass** die obere Umlenkplatte (22) und die untere Umlenkplatte (24) von der Streuguteinlassseite (18) in Richtung der Streugutauslassseite (20) auseinanderlaufen und/oder gemeinsam eine sich in Richtung der Streuguteinlassseite (18) verjüngende Keilform ausbilden.

3. Grenzstreueinrichtung (10) nach Anspruch 1 oder 2,
**dadurch gekennzeichnet, dass** die Umlenkeinrichtung (12) eine in Flugrichtung des Streuguts hinter der Streugutstromtrenneinrichtung (16) angeordnete Prallplatte (28) aufweist, welche dazu eingerichtet ist, zumindest einen Teil des bereits durch die Streugutstromtrenneinrichtung (16) umgelenkten oberen Streugutteilstroms (202) und/oder unteren Streugutteilstroms (204) umzulenken.

4. Grenzstreueinrichtung (10) nach Anspruch 3,
**dadurch gekennzeichnet, dass** die Neigung der Prallplatte (28) einstellbar und die Prallplatte (28) in mehreren Neigungsausrichtungen feststellbar ist.

5. Grenzstreueinrichtung (10) nach einem der vorstehenden Ansprüche, **dadurch gekennzeichnet, dass** die Umlenkeinrichtung (12) mehrere voneinander beabstandete aufrechte Umlenklamellen (32a-32f) aufweist, welche dazu eingerichtet sind, die Radialströmungsrichtung des oberen Streugutteilstroms (202) und/oder des unteren Streugutteilstroms (204) zu verändern.

6. Grenzstreueinrichtung (10) nach Anspruch 5,
wobei die Umlenkeinrichtung (12) einen oberen Umlenkkanal (34) für den oberen Streugutteilstrom (202) aufweist,
**dadurch gekennzeichnet, dass** die aufrechten Umlenklamellen (32a-32f), insbesondere nur, innerhalb des oberen Umlenkkanals (34) angeordnet sind.

7. Grenzstreueinrichtung (10) nach einem der vorstehenden Ansprüche, **dadurch gekennzeichnet, dass** die Befestigungseinrichtung (14) und die Umlenkeinrichtung (12) in unterschiedlichen Relativpositionen aneinander fixierbar sind.

8. Streugerät zum Ausbringen von Streugut, mit
- zwei nebeneinander angeordneten und rotierend antreibbaren Streuscheiben (100); und
- einer an einer Aufhängung befestigten Grenzstreueinrichtung (10);
**dadurch gekennzeichnet, dass** die Grenzstreueinrichtung (10) nach einem der vorstehenden Ansprüche ausgebildet ist.

9. Verfahren zum Ausbringen von Streugut im Bereich einer Grenze einer landwirtschaftlichen Nutzfläche mittels eines Streugeräts, mit den Schritten:
- Positionieren einer Grenzstreueinrichtung (10) gemäß einem der Ansprüche 1-7 im Streugutabwurfbereich einer Streuscheibe (100);
- selbsttätiges Einstellen eines Grenzstreu-Aufgabepunkts des Streuguts auf die Streuscheibe (100) durch das Streugerät;
- Abwerfen des aufgegebenen Streuguts durch die Streuscheibe (100) in Richtung der Grenzstreueinrichtung (10);
wobei dass das Einstellen des Grenzstreu-Aufgabepunkts des Streuguts auf die Streuscheibe (100) in Abhängigkeit der verwendeten Streuscheibe (100) und/oder in Abhängigkeit von Abwurfeigenschaften des Streuguts erfolgt.

10. Verfahren nach Anspruch 9,
**dadurch gekennzeichnet, dass** das Einstellen des Grenzstreu-Aufgabepunkts des Streuguts auf die Streuscheibe (100) in Abhängigkeit des Abstands des Streugeräts oder der Streuscheibe (100) zur Grenze und/oder in Abhängigkeit der Ausrichtung einer Prallplatte (28) einer den Streugutstrom (200) umlenkenden Umlenkeinrichtung (12) der Grenzstreueinrichtung (10) erfolgt.

11. Verfahren nach Anspruch 9 oder 10,
**dadurch gekennzeichnet, dass** zum Einstellen des Grenzstreu-Aufgabepunkts des Streuguts auf die Streuscheibe (100) eine Berechnung des Grenzstreu-Aufgabepunkts durchgeführt wird, bei welcher von einem für das Normalstreuen geeigneten Normalstreu-Aufgabepunkt ausgegangen wird.

12. Verfahren nach einem der Ansprüche 9 bis 11,
**gekennzeichnet durch** den Schritt:
- selbsttätiges Einstellen einer Grenzstreu-Aufgabemenge an Streugut auf die Streuscheibe (100);
wobei das Einstellen der Grenzstreu-Aufgabemenge an Streugut in Abhängigkeit des eingestellten Aufgabepunkts und/oder in Abhängigkeit des Abstands des Streugeräts zur Grenze erfolgt.

13. Verfahren nach einem der Ansprüche 9 bis 12,
wobei die verwendete Streuscheibe (100) unterschiedliche Wurfschaufeln (102a, 102b) aufweist und die Grenzstreueinrichtung (10) dazu eingerichtet ist, den Streugutstrom (200) in einen oberen Streugutteilstrom (202) und einen unteren Streugutteilstrom (204) aufzuteilen;
**dadurch gekennzeichnet, dass** das Positionieren der Grenzstreueinrichtung (10) im Streugutabwurfbereich der Streuscheibe (100) derart erfolgt, dass das von einer ersten Wurfschaufel (102a) abgeworfene Streugut von der Grenzstreueinrichtung (10) in einen oberen Streugutteilstrom (202) und einen unteren Streugutteilstrom (204) aufgeteilt wird und das von einer zweiten Wurfschaufel (102b) abgeworfene Streugut von der Grenzstreueinrichtung (10) derart umgelenkt wird, dass dieser im Wesentlichen vollständig dem oberen Streugutteilstrom (202) folgt.

## Claims

1. Boundary spreading device (10) for a spreader, having
- a deflection device (12) which is designed to deflect a spreading-material stream (200); and
- a fastening device (14) by means of which the boundary spreading device (10) is able to be fastened to a spreader;
wherein the deflection device (12) has a spreading-material stream separating device (16) which is designed to split the spreading-material stream (200) into an upper spreading-material part-stream (202) and a lower spreading-material part-stream (204) ;
wherein the spreading-material stream separating device (16) has an upper deflection plate (22) for deflecting the upper spreading-material part-stream (202) and a lower deflection plate (24) for deflecting the lower spreading-material part-stream (204), **characterized in that** the upper deflection plate (22) and the lower deflection plate (24) have different inclinations from one another.

2. Boundary spreading device (10) according to Claim 1,
wherein the deflection device (12) has a spreading-material inlet side (18) and a spreading-material outlet side (20),
**characterized in that** the upper deflection plate (22) and the lower deflection plate (24) diverge from the spreading-material inlet side (18) in the direction of the spreading-material outlet side (20) and/or jointly form a wedge shape narrowing in the direction of the spreading-material inlet side (18).

3. Boundary spreading device (10) according to Claim 1 or 2,
**characterized in that** the deflection device (12) has a baffle plate (28) arranged behind the spreading-material stream separating device (16) in the direction of flight of the spreading material, said baffle plate (28) being designed to deflect at least a part of the upper spreading-material part-stream (202) and/or lower spreading-material part-stream (204) already deflected by the spreading-material stream separating device (16).

4. Boundary spreading device (10) according to Claim 3,
**characterized in that** the inclination of the baffle plate (28) is settable and the baffle plate (28) is able to be secured in a plurality of inclination orientations.

5. Boundary spreading device (10) according to one of the preceding claims,
**characterized in that** the deflection device (12) has a plurality of mutually spaced-apart upright deflection slats (32a-23f) which are designed to change the radial flow direction of the upper spreading-material part-stream (202) and/or of the lower spreading-material part-stream (204).

6. Boundary spreading device (10) according to Claim 5,
wherein the deflection device (12) has an upper deflection channel (34) for the upper spreading-material part-stream (202),
**characterized in that** the upright deflection slats (32a-32f) are arranged, in particular only, within the upper deflection channel (34).

7. Boundary spreading device (10) according to one of the preceding claims,
**characterized in that** the fastening device (14) and the deflection device (12) are fixable to one another in different relative positions.

8. Spreader for dispensing spreading material, having
- two spreading discs (100) that are arranged alongside one another and are able to be driven in rotation; and
- a boundary spreading device (10) fastened to a mounting;
**characterized in that** the boundary spreading device (10) is configured according to one of the preceding claims.

9. Method for dispensing spreading material in the region of a boundary of an agricultural useful area by means of a spreader, having the steps of:
- positioning a boundary spreading device (10) according to one of Claims 1-7 in the spreading-material ejection area of a spreading disc (100);
- automatically setting a boundary-spreading discharging point of the spreading material onto the spreading disc (100) by the spreader;
- ejecting the discharged spreading material by the spreading disc (100) in the direction of the boundary spreading device (10);
wherein the setting of the boundary-spreading discharging point of the spreading material onto the spreading disc (100) takes place depending on the spreading disc (100) used and/or depending on ejection properties of the spreading material.

10. Method according to Claim 9,
**characterized in that** the setting of the boundary-spreading discharging point of the spreading material onto the spreading disc (100) takes place depending on the distance of the spreader or of the spreading disc (100) from the boundary and/or depending on the orientation of a baffle plate (28) of a deflection device (12), deflecting the spreading material stream (200), of the boundary spreading device (10)

11. Method according to Claim 9 or 10,
**characterized in that**, to set the boundary-spreading discharging point of the spreading material onto the spreading disc (100), a calculation of the boundary-spreading discharging point is carried out, in which the starting point is a normal-spreading discharging point suitable for normal spreading.

12. Method according to one of Claims 9 to 11,
**characterized by** the step of:
- automatically setting the boundary-spreading discharging quantity of spreading material onto the spreading disc (100);
wherein the setting of the boundary-spreading discharging quantity of spreading material takes place depending on the set discharging point and/or depending on the distance of the spreader from the boundary.

13. Method according to one of Claims 9 to 12,
wherein the spreading disc (100) used has different thrower blades (102a, 102b) and the boundary spreading device (10) is designed to split the spreading-material stream (200) into an upper spreading-material part stream (202) and a lower spreading-material part stream (204);
**characterized in that** the boundary spreading device (10) is positioned in the spreading-material ejection area of the spreading disc (100) such that the spreading material ejected by a first thrower blade (102a) is split by the boundary spreading device (10) into an upper spreading-material part-stream (202) and a lower spreading-material part-stream (204), and the spreading material ejected by a second thrower blade (102b) is deflected by the boundary spreading device (10) such that it follows the upper spreading-material part-stream (202) substantially fully.

## Revendications

1. Dispositif d'épandage en limite (10) pour un appareil d'épandage, avec :
- un dispositif de déviation (12) qui est conçu pour dévier un flux de produit à épandre (200) ; et
- un dispositif de fixation (14) à l'aide duquel le dispositif d'épandage en limite (10) peut être fixé à un appareil d'épandage ;
le dispositif de déviation (12) comporte un dispositif de séparation de flux de produit à épandre (16) qui est conçu pour répartir le flux de produit à épandre (200) en une partie de flux de produit à épandre supérieure (202) et une partie de flux de produit à épandre inférieure (204) ;
le dispositif de séparation de flux de produit à épandre (16) comportant une plaque de déviation supérieure (22) pour dévier la partie de flux de produit à épandre supérieure (202) et une plaque de déviation inférieure (24) pour dévier la partie de flux de produit à épandre inférieure (204) ;
**caractérisé en ce que** :
la plaque de déviation supérieure (22) et la plaque de déviation inférieure (24) présentent des inclinaisons s'éloignant l'une de l'autre.

2. Dispositif d'épandage en limite (10) selon la revendication 1,
le dispositif de déviation (12) comportant un côté d'admission de produit à épandre (18) et un côté de sortie de produit à épandre (20) ;
**caractérisé en ce que** :
la plaque de déviation supérieure (22) et la plaque de déviation inférieure (24) divergent depuis le côté d'admission de produit à épandre (18) en direction du côté de sortie de produit à épandre (20) et/ou forment ensemble une forme de clavette se rétrécissant en direction du côté d'admission de produit à épandre (18).

3. Dispositif d'épandage en limite (10) selon la revendication 1 ou 2, **caractérisé en ce que** le dispositif de déviation (12) comporte un déflecteur (28) disposé dans la direction d'éjection du produit à épandre derrière le dispositif de séparation de flux de produit à épandre (16) qui est conçu pour dévier au moins une partie de la partie de flux de produit à épandre supérieure (202) et/ou de la partie de flux de produit à épandre inférieures (204) déjà déviées par le dispositif de séparation de flux de produit à épandre (16).

4. Dispositif d'épandage en limite (10) selon la revendication 3, **caractérisé en ce que** l'inclinaison du déflecteur (28) est réglable et que le déflecteur (28) peut être placé dans plusieurs orientations d'inclinaison.

5. Dispositif d'épandage en limite (10) selon l'une quelconque des revendications précédentes, **caractérisé en ce que** le dispositif de déviation (12) comporte plusieurs lamelles de déviation (32a-32f) droites espacées les unes par rapport aux autres pouvant être orientées de façon à faire varier la direction radiale d'écoulement de la partie de flux de produit à épandre supérieure (202) et/ou de la partie de flux de produit à épandre inférieure (204).

6. Dispositif d'épandage en limite (10) selon la revendication 5 ;
le dispositif de déviation (12) comportant un canal de déviation supérieur (34) pour la partie de flux de produit à épandre supérieure (202) ;
**caractérisé en ce que** :
les lamelles de déviation (32a-32f) droites sont disposées à l'intérieur du canal de déviation supérieur (34), notamment uniquement à l'intérieur de celui-ci.

7. Dispositif d'épandage en limite (10) selon l'une quelconque des revendications précédentes, **caractérisé en ce que** le dispositif de fixation (14) et le dispositif de déviation (12) peuvent être fixés l'un à l'autre dans différentes positions relatives.

8. Appareil d'épandage permettant d'amener un produit à épandre, avec :
deux disques d'épandage (100) disposés côte à côte et pouvant être entraînés en rotation ; et
un dispositif d'épandage en limite (10) fixé à une suspension ;
**caractérisé en ce que** le dispositif d'épandage en limite (10) est réalisé selon l'une quelconque des revendications précédentes.

9. Procédé permettant d'amener un produit à épandre dans la zone d'une limite d'une surface utile agricole à l'aide d'un appareil d'épandage, avec les étapes suivantes :
- positionnement d'un dispositif d'épandage en limite (10) selon l'une quelconque des revendications 1 à 7 dans la zone d'éjection de produit à épandre d'un disque d'épandage (100) ;
- réglage automatique d'un point cible d'épandage en limite du produit à épandre sur le disque d'épandage (100) au travers de l'appareil d'épandage ;
- éjection du produit à épandre amené au travers du disque d'épandage (100) en direction du dispositif d'épandage en limite (10) ;
le réglage du point cible d'épandage en limite du produit à épandre s'effectuant sur le disque d'épandage (100) en fonction du disque d'épandage (100) utilisé et/ou en fonction des propriétés d'éjection du produit à épandre.

10. Procédé selon la revendication 9, **caractérisé en ce que** le réglage du point cible d'épandage en limite du produit à épandre s'effectue sur le disque d'épandage (100) en fonction de la distance entre l'appareil d'épandage ou le disque d'épandage (100) et la limite et/ou en fonction de l'orientation d'un déflecteur (28) d'un dispositif de déviation (12) du dispositif d'épandage en limite (10) déviant le flux de produit à épandre (200).

11. Procédé selon la revendication 9 ou 10, **caractérisé en ce que** pour le réglage du point cible d'épandage en limite du produit à épandre sur le disque d'épandage (100), un calcul du point cible d'épandage en limite est réalisé pour lequel on part d'un point cible d'épandage normal adapté à un épandage normal.

12. Procédé selon l'une quelconque des revendications 9 à 11 ;
**caractérisé par** l'étape suivante :
- réglage automatique d'une quantité objectif d'épandage en limite de produit à épandre sur le disque d'épandage (100) ;
le réglage de la quantité objectif d'épandage en limite de produit à épandre s'effectuant en fonction du point cible réglé et/ou en fonction de la distance de l'appareil d'épandage par rapport à la limite.

13. Procédé selon l'une quelconque des revendications 9 à 12, le disque d'épandage (100) utilisé comportant différentes aubes d'éjection (102a, 102b) et le dispositif d'épandage en limite (10) étant conçu pour répartir le flux de produit à épandre (200) en une partie de flux de produit à épandre supérieure (202) et une partie de flux de produit à épandre inférieure (204) ; **caractérisé en ce que** :
le positionnement du dispositif d'épandage en limite (10) se produit de telle sorte dans la zone d'éjection de produit à épandre du disque d'épandage (100) que le produit à épandre éjecté par une première ailette d'éjection (102a) est divisé par le dispositif d'épandage en limite (10) en une partie de flux de produit à épandre supérieure (202) et une partie de flux de produit à épandre inférieure (204) et que le produit à épandre éjecté par une deuxième ailette d'éjection (102b) est dévié de telle sorte par le dispositif d'épandage en limite (10) que celui-ci suit pour l'essentiel entièrement la partie de flux de produit à épandre supérieure (202).
